# EUROPEAN PATENT APPLICATION

(11) **EP 4 692 602 A1**
(43) Date of publication of application: **11.02.2026**
(21) Application number: 24779693.1
(22) Date of filing: 18.03.2024
(51) Int. Cl.: F16H 57/04

(54) **VEHICLE DRIVE DEVICE**

(30) Priority: 31.03.2023 JP 2023057005
(71) Applicant: AISIN CORPORATION, Kariya-shi, Aichi 448-8650 (JP)
(72) Inventor: FUJIWARA Kei, Kariya-shi, Aichi 448-8650 (JP); ABE Toshiya, Kariya-shi, Aichi 448-8650 (JP); UENO Akihiro, Kariya-shi, Aichi 448-8650 (JP); FUKUMA Takeshi, Kariya-shi, Aichi 448-8650 (JP)
(74) Representative: Winter, Brandl - Partnerschaft mbB
(86) International application number: PCT/JP2024/010626
(87) International publication number: WO 2024/203568

(57) **Abstract**

Disclosed is a vehicle drive device including a case, a power transmission mechanism, an oil pump, and an oil passage structure. The case includes a case member including, at an axial end, a first mating surface and a second mating surface that is located on a radially inner side of the first mating surface as viewed in the axial direction of a rotary shaft member, and a cover member including a third mating surface aligned with the first mating surface in the axial direction and a fourth mating surface aligned with the second mating surface in the axial direction, the cover member being coupled to the case member via a coupling between the first mating surface and the third mating surface. The oil passage structure includes an oil passage between a discharge side of the oil pump and an oil supply target. The oil passage is formed in a manner surrounded by at least one of the second mating surface or the fourth mating surface as viewed in the axial direction, and includes a groove portion recessed toward at least one mating surface in the axial direction.

## Description

### TECHNICAL FIELD

The present disclosure relates to a vehicle drive device.

### BACKGROUND ART

There is known a structure in which oil in a housing chamber of a case that houses a power transmission mechanism is guided to an oil cooler via an oil passage (inside a case wall portion) formed in the case by processing.

### CITATIONS LIST

### PATENT LITERATURE

Patent Literature 1: WO 2019/131424 A

### SUMMARY OF INVENTION

### TECHNICAL PROBLEMS

When the oil passage is formed in the case by processing, a pipe member is not separately required, but a machined hole formed by machining (drilling) is exposed to the outside, and thus a plug for closing the oil passage is required. In this regard, in the conventional technique as described above, the entire oil passage for guiding oil from the pump to the oil cooler includes the oil passage formed in the case by processing, which causes a problem in that the number of plugs and the number of assembling steps are likely to increase. In general, since machined holes, formed by machining, are formed linearly, the number of plugs increases as the number of bent portions increases when the oil passage serving as a path including the bent portions is formed.

Therefore, in one aspect, the present disclosure reduces the number of plugs required in an oil passage included in an oil supply system from an oil pump to a supply target.

### SOLUTIONS TO PROBLEMS

In one aspect, there is provided a vehicle drive device including: a case that forms a housing chamber in which oil flows; a power transmission mechanism disposed in the housing chamber and including a rotary shaft member that enables transmission of power from a power source to a wheel; an oil pump that sucks and discharges oil in the housing chamber; and an oil passage structure, at least a part of which is formed in the case. The case includes a case member including, at an axial end, a first mating surface and a second mating surface that is located on a radially inner side of the first mating surface as viewed in an axial direction of the rotary shaft member, and a cover member including a third mating surface aligned with the first mating surface in the axial direction and a fourth mating surface aligned with the second mating surface in the axial direction, the cover member being coupled to the case member via a coupling between the first mating surface and the third mating surface. The oil passage structure includes an oil passage between a discharge side of the oil pump and an oil supply target. The oil passage is formed in a manner surrounded by at least one of the second mating surface or the fourth mating surface as viewed in the axial direction, and includes a groove portion recessed toward the at least one mating surface in the axial direction.

### ADVANTAGEOUS EFFECTS OF INVENTION

In one aspect, according to the present disclosure, it is possible to reduce the number of plugs required in the oil passage included in the oil supply system from the oil pump to the supply target.

### BRIEF DESCRIPTION OF DRAWINGS

FIG. 1 is a schematic top view showing an installation state of a vehicle drive device in a vehicle.
FIG. 2 is a schematic cross-sectional view of a main part of the vehicle drive device.
FIG. 2A is a skeleton diagram showing the vehicle drive device.
FIG. 2B is a diagram schematically showing the flow of oil in the vehicle drive device according to a present embodiment.
FIG. 3 is a view schematically showing a part of a motor case as viewed from an axially second side A2.
FIG. 4 is a view schematically showing a part of a gear case member as viewed from an axially first side A1.
FIG. 5 is a cross-sectional view of a part of the gear case member, taken along a plane parallel to the axial direction.
FIG. 6 is a perspective view of the gear case member as viewed from the axially second side A2.
FIG. 7 is a diagram schematically showing the flow of oil in a vehicle drive device according to a second embodiment, together with a cross-sectional view of a main part of the vehicle drive device.

### DESCRIPTION OF EMBODIMENTS

Hereinafter, each embodiment will be described in detail with reference to the accompanying drawings. Note that the dimensional ratios in the drawings are merely examples, and the dimensional ratios are not limited thereto, and the shapes and the like in the drawings may be partially exaggerated for convenience of description. In the drawings, only some of a plurality of sections with the same attribute may be denoted by reference numerals for the sake of clarity.

The directions of the respective members in the following description represent directions in a state where those members are assembled to a vehicle drive device 100. In addition, terms related to a dimension, placement direction, placement position, and the like for each member are concepts that include states having differences due to errors (errors within an allowable in manufacturing).

In the present specification, the term "drive-coupled" refers to a state in which two rotary elements are coupled to each other to transmit a driving force (synonymous with torque), and includes a state in which the two rotary elements are coupled to each other so as to rotate integrally, or a state in which the two rotary elements are coupled to each other to transmit a driving force via one or two or more transmission members. Such transmission members include various members (e.g., shaft, gear mechanism, belt, chain, etc.) that transmit rotation at the same speed or at variable speeds. Note that the transmission members may include an engagement device (e.g., friction engagement device, meshing engagement device, etc.) that selectively transmits rotation and a driving force may be included as the transmission member.

In the present specification, the "rotary electric machine" is used as a concept that includes any of a motor (electric motor), a generator (electric generator), and a motor-generator that performs both functions of the motor and the generator as necessary. In the present specification, with regard to the placement of two members, "overlapping as viewed in a specific direction" means that when an imaginary straight line parallel to the viewing direction is moved in each direction orthogonal to the imaginary straight line, a region where the imaginary straight line intersects both of the two members at least partially exists. Further, in the present specification, with regard to the placement of two members, "placement regions in a specific direction overlap" means that a placement region of one member in the specific direction includes at least a part of a placement region of the other member in the specific direction.

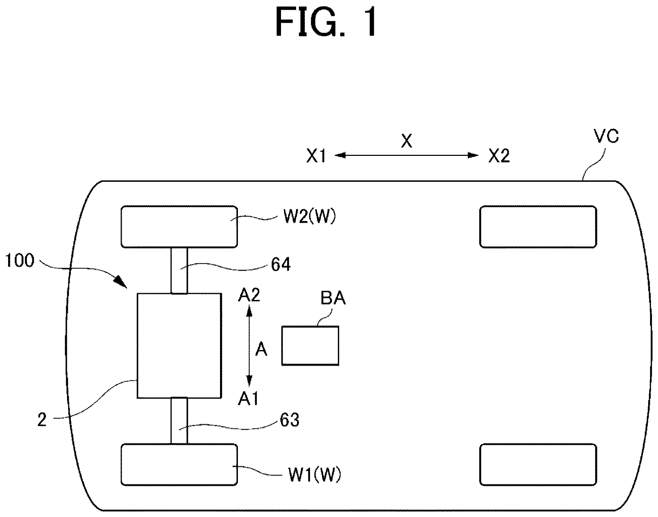

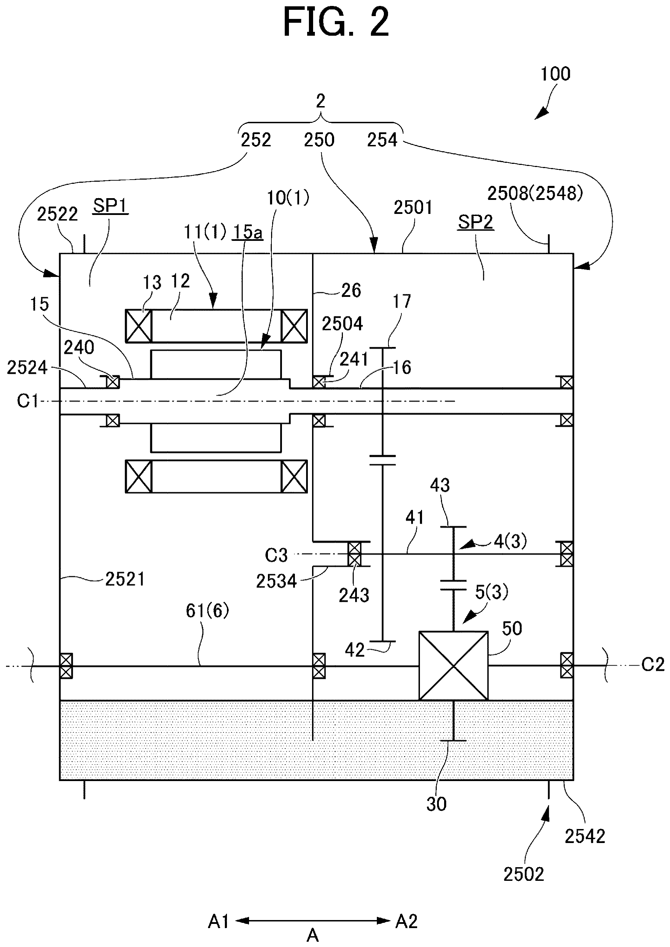

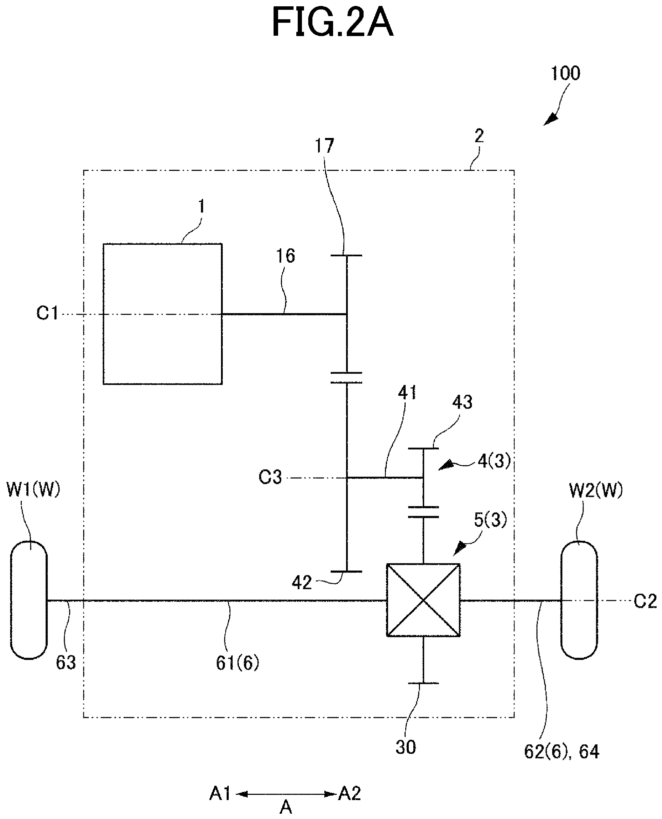

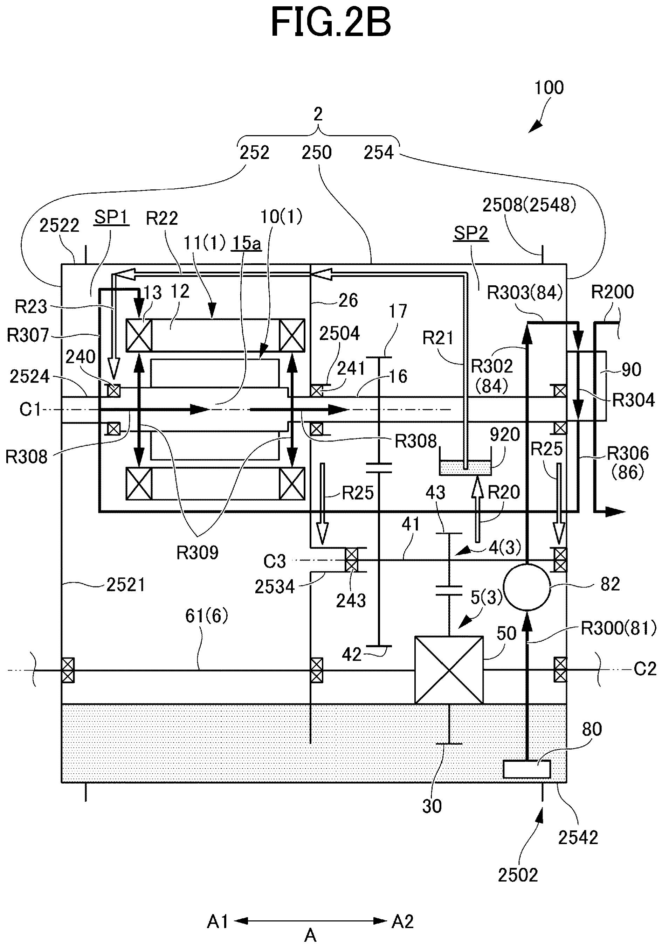

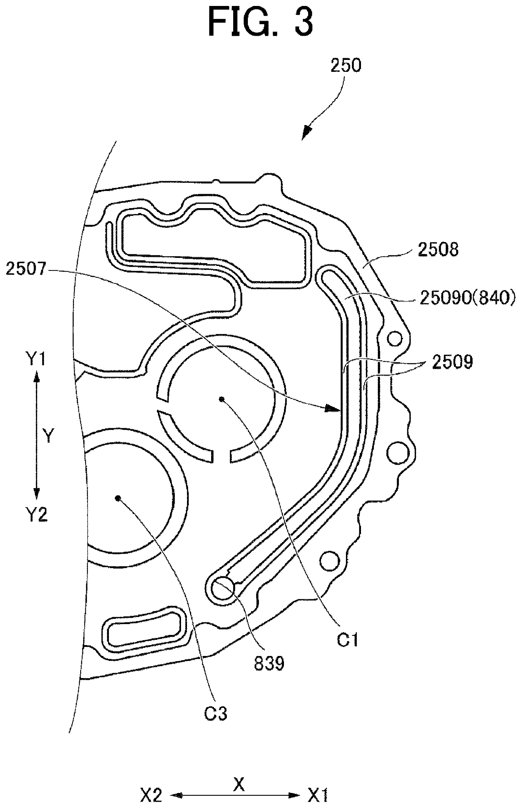

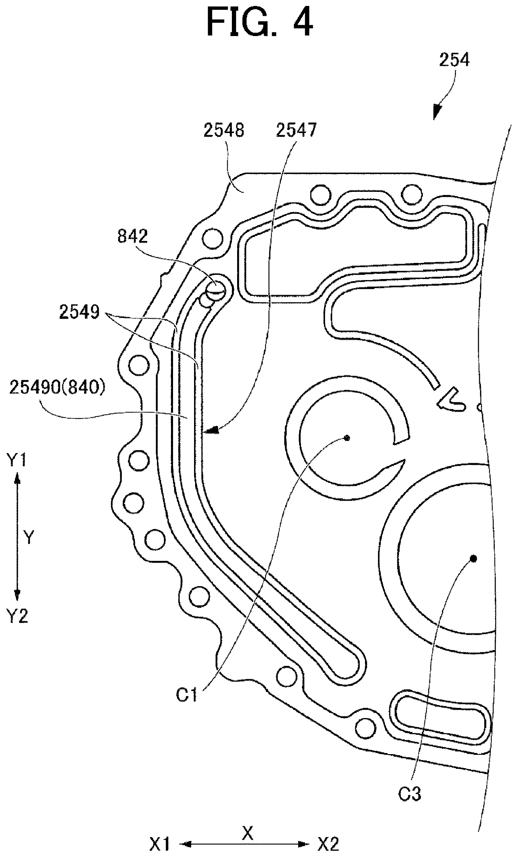

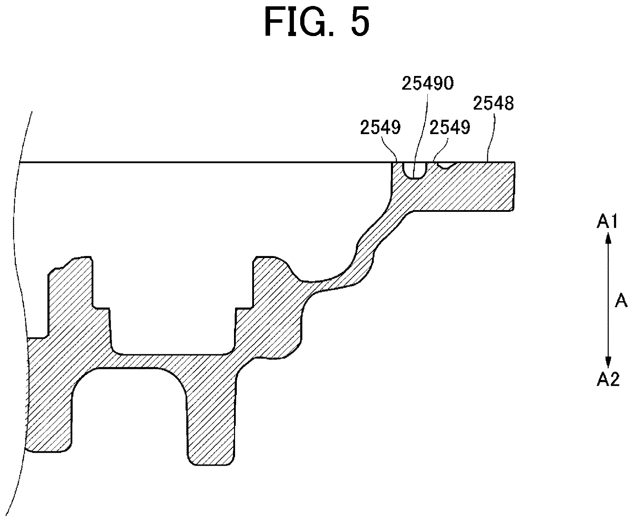

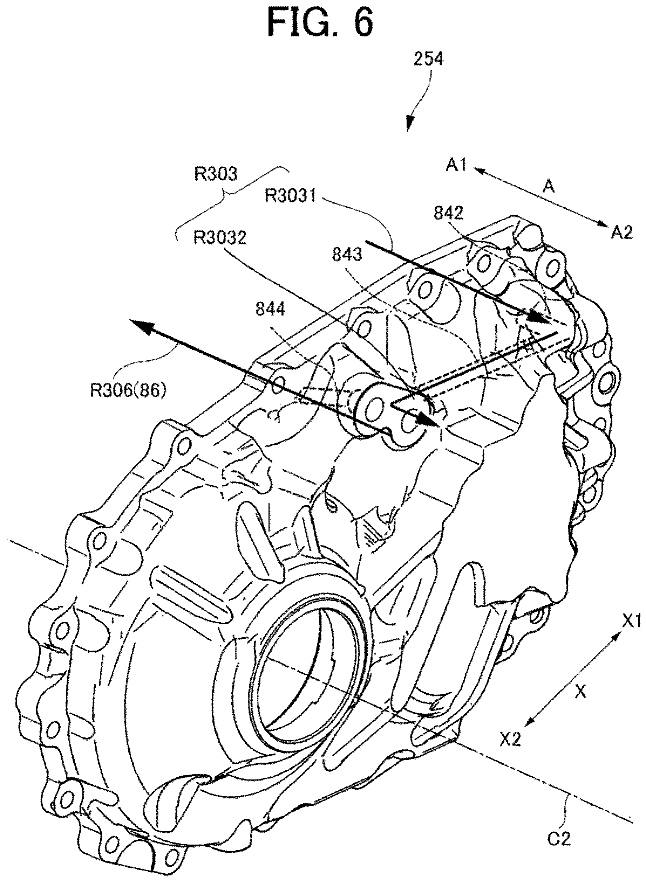

FIG. 1 is a schematic top view showing an installation state of a vehicle drive device 100 in a vehicle VC. FIG. 2 is a cross-sectional view of a main part of the vehicle drive device 100. FIG. 2A is a skeleton diagram showing the vehicle drive device 100. FIG. 2B is a diagram schematically showing the flow of oil in the vehicle drive device 100 according to a present embodiment. FIG. 3 is a view schematically showing a part of a motor case 250 as viewed from an axially second side A2. FIG. 4 is a view schematically showing a part of a gear case member 254 (a portion facing a part of the motor case 250 in FIG. 3 in the axial direction) as viewed from an axially first side A1. FIG. 5 is a cross-sectional view of a part of the gear case member 254, taken along a plane parallel to the axial direction. FIG. 6 is a perspective view of the gear case member 254 as viewed from the axially second side A2. Note that an oil cooler 90 is not shown in FIGS. 2 and 6.

An axial direction A is defined in FIG. 2, and a first direction X and a second direction Y are defined in FIGS. 3 and 4. The first direction X, the second direction Y, and the axial direction A are three axial directions orthogonal to each other, and the second direction Y has a component in the vertical direction. In this case, the first direction X corresponds to the vehicle front-rear direction. The second direction Y may be parallel to the gravity direction (perpendicular direction) or may be inclined in the installed state of the vehicle drive device 100 in the vehicle VC. For example, the vehicle drive device 100 may be installed in the vehicle VC in a direction in which a second direction first side Y1 is the upper side and a second direction second side Y2 is the lower side. The vehicle drive device 100 may be installed in the vehicle VC in a direction in which a first direction first side X1 is the front side (the front side in the vehicle front-rear direction) and a first direction second side X2 is the rear side (the rear side in the vehicle front-rear direction). As shown in FIG. 1, the vehicle drive device 100 may be installed on the front side of the central portion in the vehicle front-rear direction of the vehicle VC, or may be installed on the rear side of the central portion in the vehicle front-rear direction of the vehicle VC. When the vehicle drive device 100 is installed on the rear side of the central portion in the vehicle front-rear direction of the vehicle VC as described above, a pair of wheels W driven by the vehicle drive device 100 may be, for example, a pair of left and right rear wheels.

When the vehicle VC includes a pair of left and right front wheels and a pair of left and right rear wheels, one of the pair of left and right front wheels and the pair of left and right rear wheels that is not driven by the vehicle drive device 100 (in the example shown in FIG. 1, a pair of left and right rear wheels) may be driven by a drive device other than the vehicle drive device 100. The drive device other than the vehicle drive device 100 is, for example, a drive device configured to transmit output torque of an internal combustion engine to a pair of wheels to be driven, a drive device configured to transmit output torque of a rotary electric machine (a rotary electric machine different from a rotary electric machine 1 included in the vehicle drive device 100) to a pair of wheels to be driven, or a drive device configured to transmit output torque of both the internal combustion engine and the rotary electric machine (a rotary electric machine different from the rotary electric machine 1 included in the vehicle drive device 100) to a pair of wheels to be driven. The drive device other than the vehicle drive device 100 may be a drive device having the same configuration as the vehicle drive device 100.

In the present embodiment, as schematically shown in FIG. 2A, the vehicle drive device 100 includes the rotary electric machine 1, a pair of output members 6 that is drive-coupled to a pair of wheels W, and a transmission mechanism 3 that transmits a driving force between the rotary electric machine 1 and the pair of output members 6. The vehicle drive device 100 further includes a case 2 that houses the rotary electric machine 1. The case 2 also houses the pair of output members 6 and the transmission mechanism 3.

A first output member 61, which is one of the pair of output members 6, is drive-coupled to a first wheel W1, which is one of the pair of wheels W, and a second output member 62, which is the other of the pair of output members 6, is drive-coupled to a second wheel W2, which is the other of the pair of wheels W. As shown in FIG. 1, the vehicle VC in which the vehicle drive device 100 is installed includes a first drive shaft 63 that rotates integrally with the first wheel W1 and a second drive shaft 64 that rotates integrally with the second wheel W2. The first drive shaft 63 is coupled to the first wheel W1 via, for example, a constant velocity joint, and the second drive shaft 64 is coupled to the second wheel W2 via, for example, a constant velocity joint. Then, the first output member 61 is coupled to the first drive shaft 63 so as to rotate integrally with the first drive shaft 63, and the second output member 62 is coupled to the second drive shaft 64 so as to rotate integrally with the second drive shaft 64.

The vehicle drive device 100 transmits the output torque of the rotary electric machine 1 to the pair of wheels W via the pair of output members 6 to cause the vehicle VC in which the vehicle drive device 100 is installed to travel. That is, the rotary electric machine 1 is a driving force source for the pair of wheels W. The pair of wheels W is a pair of left and right wheels (e.g., a pair of left and right front wheels or a pair of left and right rear wheels) in the vehicle VC. The rotary electric machine 1 may be, for example, an alternating-current (AC) rotary electric machine that is driven by three-phase AC. The rotary electric machine 1 is electrically connected to a battery BA (see FIG. 1) (including a power storage device such as a capacitor) via an inverter device (not shown) that performs power conversion between direct-current (DC) power and AC power, and performs powering by receiving power supply from the battery BA, or supplies power generated by the inertial force or the like of the vehicle VC to the power storage device to store the power.

As shown in FIG. 2, the rotary electric machine 1 and the pair of output members 6 are disposed separately on two axes (specifically, a first axis C1 and a second axis C2) parallel to each other. Specifically, the rotary electric machine 1 is disposed on the first axis C1, and the pair of output members 6 is disposed on the second axis C2 different from the first axis C1. The first axis C1 and the second axis C2 are axes (virtual axes) arranged parallel to each other. The transmission mechanism 3 includes an output gear (ring gear) 30, which is drive-coupled to at least one of the pair of output members 6, coaxially with the pair of output members 6 (i.e., on the second axis C2).

As shown in FIG. 1, the vehicle drive device 100 is installed in the vehicle VC in a direction in which the axial direction A is along the vehicle left-right direction. The axial direction A is a direction parallel to the first axis C1 and the second axis C2, in other words, an axial direction common between the first axis C1 and the second axis C2. That is, the axial direction A is a direction in which the rotary axis of the rotary electric machine 1 extends, and is also a direction in which the rotary axis of the pair of output members 6 extends. Here, one side in the axial direction A is defined as the axially first side A1, and the other side in the axial direction A (a side opposite to the axially first side A1 in the axial direction A) is defined as the axially second side A2. The axially first side A1 is a side on which the rotary electric machine 1 is disposed relative to the transmission mechanism 3 in the axial direction A. As shown in FIG. 2A, the first output member 61 is the output member 6 disposed on the axially first side A1 out of the pair of output members 6, and the second output member 62 is the output member 6 disposed on the axially second side A2 out of the pair of output members 6.

As shown in FIG. 1, the vehicle drive device 100 may be installed in the vehicle VC in a direction in which the axially first side A1 is the vehicle left side and the axially second side A2 is the vehicle right side. In this case, the first wheel W1 to which the first output member 61 is drive-coupled is a left wheel, and the second wheel W2 to which the second output member 62 is drive-coupled is a right wheel. In FIG. 1, it is assumed that the vehicle drive device 100 is a front-wheel-drive type drive device that drives a pair of left and right front wheels. Therefore, in the example shown in FIG. 1, the first wheel W1 is a left front wheel, and the second wheel W2 is a right front wheel.

As shown in FIG. 2, the rotary electric machine 1 includes a rotor 10 and a stator 11. The stator 11 is fixed to the case 2, and the rotor 10 is supported by the case 2 so as to be rotatable relative to the stator 11. The rotary electric machine 1 may be an inner rotor type rotary electric machine, and in this case, the rotor 10 may be disposed on the inner side in the radial direction relative to the stator 11 so as to overlap the stator 11 as viewed in the radial direction along the radial direction. Here, the radial direction is a radial direction with reference to the first axis C1, in other words, a radial direction with reference to the rotary axis of the rotary electric machine 1.

The stator 11 includes a stator core 12 and a coil end portion 13 protruding from the stator core 12 in the axial direction A. A coil is wound around the stator core 12, and a portion of the coil protruding from the stator core 12 in the axial direction A forms the coil end portion 13. The coil end portions 13 are formed on both sides in the axial direction A relative to the stator core 12.

The transmission mechanism 3 includes a counter gear mechanism 4 in a power transmission path between the rotary electric machine 1 and an output gear 30. In a modification, a reduction mechanism using planetary gears, or the like, may be used instead of the counter gear mechanism 4. In this case, instead of the three-axis configuration, a two-axis configuration in which a third axis C3 is eliminated may be implemented.

In the present embodiment, the counter gear mechanism 4 is disposed on an axis offset from an input member 16, which is coaxial with the rotary electric machine 1 (i.e., the third axis C3). Note that the input member 16 is coupled to the rotor 10 so as to rotate integrally with the rotor 10. In the example shown in FIG. 2, the vehicle drive device 100 includes a rotor shaft 15 to which the rotor 10 is fixed, and the input member 16 is coupled to the rotor shaft 15 so as to rotate integrally with the rotor shaft 15. Specifically, a portion of the input member 16 on the axially first side A1 may be coupled (here, spline-coupled) to a portion of the rotor shaft 15 on the axially second side A2. Unlike such a configuration, the rotor shaft 15 of the vehicle drive device 100 can be formed integrally with the input member 16 as a single piece.

The counter gear mechanism 4 includes a counter shaft 41, a first counter gear 42, and a second counter gear 43.

The counter shaft 41 is a rotary shaft member that rotates about the third axis C3. The third axis C3 extends parallel to the first axis C1. The first counter gear 42 is an input element of the counter gear mechanism 4. The first counter gear 42 meshes with an input gear 17 of the input member 16. The first counter gear 42 is coupled to the counter shaft 41 so as to rotate integrally with the counter shaft 41.

The second counter gear 43 is an output element of the counter gear mechanism 4. In the present embodiment, as an example, the second counter gear 43 is formed to have a smaller diameter than the first counter gear 42. The second counter gear 43 is provided on the counter shaft 41 so as to rotate integrally with the counter shaft 41.

The transmission mechanism 3 includes a differential gear mechanism 5 on a power transmission path between the output gear 30 and the wheel W. A differential gear mechanism 5 is disposed on the second axis C2 as the rotary axis. The differential gear mechanism 5 distributes the driving force transmitted from the rotary electric machine 1 side to the pair of output members 6. The differential gear mechanism 5 may be disposed coaxially with the pair of output members 6 (i.e., on the second axis C2). The differential gear mechanism 5 distributes the driving force transmitted from the rotary electric machine 1 side to the output gear 30 to the pair of output members 6. That is, the output gear 30 is drive-coupled to both of the pair of output members 6 via the differential gear mechanism 5. Note that the differential gear mechanism 5 may be a bevel-gear type differential gear mechanism, and the output gear 30 may be coupled to a differential case portion 50 included in the differential gear mechanism 5 so as to rotate integrally with the differential case portion 50.

Here, the configuration of the case 2 will be further described with reference to FIG. 2.

The case 2 may be formed of, for example, aluminum. The case 2 can be formed by casting or the like. The case 2 includes the motor case 250, a cover member 252, and a gear case member 254.

The motor case 250 forms a motor housing chamber SP1 that houses the rotary electric machine 1. Note that the motor housing chamber SP1 may be an oil-tight space containing oil for cooling and/or lubricating the rotary electric machine 1 (and/or the transmission mechanism 3). The motor case 250 has a form including a peripheral wall portion 2501 that surrounds the radial outside of the rotary electric machine 1. The motor case 250 may be implemented by coupling a plurality of members.

In the example shown in FIG. 2, the motor case 250 includes a partition wall portion 26 that partitions the motor housing chamber SP1 and a gear housing chamber SP2 in the axial direction A. The partition wall portion 26 faces a bottom portion 2521 (described later) of the cover member 252 in the axial direction A.

On the axially second side A2 of the partition wall portion 26, a bearing support portion 2504 and the like that support a bearing 241 are formed. Further, on the axially second side A2 of the partition wall portion 26, a bearing support portion 2534 that supports a bearing 243 is formed. Note that the bearing support portion 2534 is formed concentrically about the third axis C3. As shown in FIG. 2, the bearing 243 is provided on the radially outer side at the end of the counter shaft 41 on the axially first side A1. Specifically, in the bearing 243, the radially outer side of an outer race is supported by the bearing support portion 2534, and the radially inner side of an inner race is supported by the outer peripheral surface of the counter shaft 41. Note that the bearing 243 may be supplied with the oil flowing along the partition wall portion 26 by its own weight, as shown by an arrow R25 in FIG. 2B.

The cover member 252 is coupled to the axially first side A1 of the motor case 250. The cover member 252 is in the form of a cover that covers the axially first side A1 in the motor housing chamber SP1. Here, the cover member 252 may cover the opening on the axially first side A1 of the motor case 250 in such a manner as to close the opening completely or substantially completely. Note that a part of the axially first side A1 of the motor housing chamber SP1 may be formed by the cover member 252.

The cover member 252 is provided with a bearing 240 that rotatably supports the rotor 10. That is, the cover member 252 includes a bearing support portion 2524 that supports the bearing 240.

As shown in FIG. 2, the bearing 240 may be provided on the radially inner side at the end of the rotor shaft 15 on the axially first side A1. In the bearing 240, the radially outer side of an outer race may be supported by the inner peripheral surface of the rotor shaft 15, and the radially inner side of an inner race may be supported by the cover member 252. As shown in FIG. 2, the bearing 241 may be provided on the radially outer side at the end of the rotor shaft 15 on the axially second side A2. In the bearing 241, the radially outer side of an outer race may be supported by the partition wall portion 26, and the radially inner side of an inner race may be supported by the outer peripheral surface of the rotor shaft 15.

In the example shown in FIG. 2, the cover member 252 includes the circular bottom portion 2521 centered on the first axis C1 and a peripheral wall portion 2522 protruding from the outer peripheral edge of the bottom portion 2521 toward the axially second side A2, and the end surface of the peripheral wall portion 2522 on the axially second side A2 is coupled to the motor case 250. A cylindrical bearing support portion 2524 protruding to the axially second side A2 is formed at a central portion (a portion centered on the first axis C1) of the bottom portion 2521 on the axially second side A2. Note that the bearing support portion 2524 is formed concentrically about the first axis C1.

The gear case member 254 forms the gear housing chamber SP2 that houses the transmission mechanism 3. Note that the gear housing chamber SP2 may be an oil-tight space communicating with the motor housing chamber SP1. The gear case member 254 is coupled to the axially second side A2 of the motor case 250. In the present embodiment, the gear case member 254 is coupled to the motor case 250 in such a manner that at a coupling portion 2502, a mating surface 2548 comes into contact with a mating surface 2508 on the motor case 250 side in the axial direction A. The gear case member 254 is in the form of a cover that covers the axially second side A2 in the gear housing chamber SP2 in a manner including the peripheral wall portion 2542 that surrounds the radially outer side of the transmission mechanism 3. The end surface of the peripheral wall portion 2542 on the axially first side A1 forms the mating surface 2548. Similarly to the mating surface 2508 on the motor case 250 side, the mating surface 2548 may extend in the same plane over the entire circumference. The gear case member 254 may be implemented by coupling a plurality of members. Note that a part of the axially first side A1 of the gear housing chamber SP2 may be formed by the motor case 250.

Next, an oil passage structure in the present embodiment will be described with reference to FIGS. 2B and 3 to 6. In the following description, when the motor housing chamber SP1 and the gear housing chamber SP2 described above are not particularly distinguished, these chambers are also simply referred to as a housing chamber SP. In FIG. 2B, the oil accumulated in the lower portion of the housing chamber SP is schematically shown by a hatched region. In FIG. 2B, the flow of oil is schematically shown by an arrow R300 and the like, and an oil passage 81 and the like that achieve the flow are schematically shown by a corresponding arrow R300 and the like.

In the present embodiment, the gear case member 254 is provided with the oil cooler 90. Details of the structure of the oil cooler 90 are arbitrary. Cooling water is supplied to the oil cooler 90 as schematically shown by an arrow R200 in FIG. 2B. Note that the cooling water may be circulated by a water pump (not shown) via a radiator (not shown). The oil cooler 90 is supplied with the oil in the housing chamber SP of the case 2. As a result, the heat of the oil in the housing chamber SP is transferred to the cooling water, and the oil in the housing chamber SP of the case 2 is cooled.

Specifically, as shown in FIG. 2B, the oil accumulated in the lower portion of the housing chamber SP is sucked into the suction port of an electric oil pump 82 via a strainer 80 and the oil passage 81 (see an arrow R300). The oil discharged from the electric oil pump 82 is supplied to the oil cooler 90 via an oil passage 84 (see arrows R302, R303). The oil passes through the oil cooler 90 (arrow R304) to be cooled by the cooling water as described above. The cooled oil may be supplied to a shaft-center oil passage 15a of the rotor shaft 15 of the rotary electric machine 1 via an oil passage 86 (arrows R306, R308). In the example shown in FIG. 2B, a catch tank 920 is provided to accumulate oil (arrow R20) scraped up by the output gear 30. In this case, oil from the catch tank 920 may be used for lubrication of the counter gear mechanism 4 and the like (see an arrow R21 and the like). Note that reference signs R21, R22, and R23 represent the flow of oil that guides the oil to the bearing 240 and the oil passage thereof.

In the present embodiment, the oil passage 84 from the electric oil pump 82 to the oil cooler 90 includes an oil passage (hereinafter referred to also as a "mating-surface oil passage 840") formed on a mating surface between the gear case member 254 and the motor case 250.

As shown in FIGS. 3 and 4, the mating-surface oil passage 840 is formed of a groove portion 25090 related to a mating surface 2509 on the motor case 250 side and a groove portion 25490 related to a mating surface 2549 on the gear case member 254 side.

Specifically, as viewed in the axial direction A, the gear case member 254 includes, on the side closer to the first axis C1 than the mating surface 2548, a ridge portion 2547 that protrudes toward the axially first side A1 and extends around the first axis C1. The end surface of the ridge portion 2547 on the axially first side A1 extends in the same plane as the mating surface 2548 to form the mating surface 2549 on the gear case member 254 side. The ridge portion 2547 includes the groove portion 25490 in association with the mating surface 2549. The groove portion 25490 is recessed in the axial direction A on the axially second side A2 in a manner surrounded by the mating surface 2549 in all directions intersecting the axial direction A (see also FIG. 5). In the present embodiment, the groove portion 25490 is surrounded by the mating surface 2549 in all directions intersecting the axial direction A, but may be partially surrounded by opening in some directions (e.g., on the side connected to another oil passage).

Similarly, as viewed in the axial direction A, the motor case 250 includes a ridge portion 2507, which protrudes toward the axially second side A2 and extends around the first axis C1, on the side closer to the first axis C1 than the mating surface 2508. The end surface of the ridge portion 2507 on the axially second side A2 extends in the same plane as the mating surface 2508 to form the mating surface 2509 on the motor case 250 side. The ridge portion 2507 includes the groove portion 25090 in association with the mating surface 2509. The groove portion 25090 is recessed in the axial direction A on the axially first side A1 in a manner surrounded by the mating surface 2509 in all directions intersecting the axial direction A. In the present embodiment, the groove portion 25090 is surrounded by the mating surface 2509 in all directions intersecting the axial direction A, but may be partially surrounded by opening in some directions (e.g., on the side connected to another oil passage).

The mating surface 2549 on the gear case member 254 side and the mating surface 2509 on the motor case 250 side have substantially the same form as viewed in the axial direction A, and the groove portion 25490 and the groove portion 25090 also have substantially the same form as viewed in the axial direction A. Accordingly, when the mating surface 2549 on the gear case member 254 side and the mating surface 2509 on the motor case 250 side come into contact with each other in the axial direction A, a substantially closed space is formed by the groove portion 25490 and the groove portion 25090. The closed space forms the mating-surface oil passage 840. In this manner, the mating-surface oil passage 840 is formed by mating-surface contact (metal touch) between the mating surface 2549 on the gear case member 254 side and the mating surface 2509 on the motor case 250 side.

In the present embodiment, as described above, the mating-surface oil passage 840 is located inside the mating surfaces 2508, 2548 related to the coupling portion 2502 (on the side closer to the first axis C1 as viewed in the axial direction A), that is, in the housing chamber SP. Therefore, the mating-surface oil passage 840 does not need to be formed by a completely oil-tight closed space. In other words, the mating surfaces 2509, 2549 of the mating-surface oil passage 840 may be aligned in the axial direction A without interposing a seal member such as an O-ring, for example. This makes it possible to reduce the number of parts and cost related to the seal member.

As described above in "TECHNICAL PROBLEMS", when an oil passage is formed in the case 2 by processing, a machined hole related to the formed oil passage has an opening (an opening exposed to the outside) formed due to the insertion and removal of a machining drill. Therefore, a plug for closing the opening is required.

In this regard, in the present embodiment, as described above, the mating-surface oil passage 840 is formed by mating-surface contact (metal touch). Note that the groove portions 25090, 25490 forming the mating-surface oil passages 840 can be formed in a mold shape (e.g., a mold shape for casting) during manufacturing of the motor case 250 and the gear case member 254, respectively. Therefore, according to the present embodiment, it is possible to reduce the number of plugs and the associated cost with respect to the oil passage 84 from the electric oil pump 82 to the oil cooler 90 because the mating-surface oil passage 840 can be formed without machining.

In the present embodiment, as described above, in contrast to an oil hole formed by machining, even if the mating-surface oil passage 840 has a curved shape or a bent shape relative to the shape as viewed in the axial direction A, an increase in the number of plugs or an increase in cost associated therewith is not caused. Therefore, according to the present embodiment, the degree of freedom of the shape of the mating-surface oil passage 840 (the shape viewed in the axial direction A) can be increased. As a result, according to the present embodiment, the mating-surface oil passage 840 can be formed using a dead space on the inner side of the mating surfaces 2508, 2548 related to the coupling portion 2502 (the side closer to the first axis C1 as viewed in the axial direction A). For example, the space on the inner side of the mating surfaces 2508, 2548 related to the coupling portion 2502 (the side closer to the first axis C1 as viewed in the axial direction A), as well as the space in the vicinity of the axial position of the mating surfaces 2508, 2548, is a space that overlaps the rotary electric machine 1 as viewed in the axial direction A and tends to be a dead space. By forming the mating-surface oil passage 840 using such a dead space, the mating-surface oil passage 840 can be formed without increasing the size of the case 2 in the radial direction or the axial direction A.

In the present embodiment, the mating-surface oil passage 840 may extend over a partial circumferential range of the entire circumference around the first axis C1, and the lower end on the lower side of the first axis C1 may be connected to an axial flow passage 839 (see FIG. 3) from the discharge side of the electric oil pump 82. That is, the mating-surface oil passage 840 may communicate with the housing chamber SP via the axial flow passage 839 and the electric oil pump 82. The upper end of the mating-surface oil passage 840 on the upper side of the first axis C1 may be connected to an oil passage 842 (see also FIG. 6) to the oil cooler 90.

In the present embodiment as well, the oil passage 84 from the electric oil pump 82 to the oil cooler 90 may partially include an oil passage formed by machining. For example, as schematically shown by dotted lines in FIG. 6, oil passages 842, 843, 844 may be formed in the gear case member 254 by machining. In this case, the oil passage 842 extends linearly in the axial direction A, and the end on the axially first side A1 is connected to the mating-surface oil passage 840 described above. The oil passage 843 may extend linearly in a direction intersecting the axial direction A, and may have an end on the radially outer side connected to the oil passage 842 and an end on the radially inner side connected to the inlet of the oil cooler 90. The oil passage 844 forms a part of the oil passage 86 shown in FIG. 2B, and may linearly extend from the outlet of the oil cooler 90 toward the axially first side A1. In this case, the oil from the mating-surface oil passage 840 flows to the oil passage 842 (arrow R3031), flows to the oil passage 843 (arrow R3032), passes through the oil cooler 90, and then flows through the oil passage 844 (arrow R306). Note that the oil supplied to the oil passage 844 (oil from the electric oil pump 82) may also be supplied to the coil end portion 13 (see arrows R306, R307 in FIG. 2B) in addition to the shaft-center oil passage 15a of the rotor shaft 15 (see arrows R306, R308 in FIG. 2B) by branching of the oil passage 844. The oil may be supplied to the coil end portion 13 via the shaft-center oil passage 15a during operation of the rotary electric machine 1 using centrifugal force (see an arrow R309 in FIG. 2B).

However, in a modification, the oil passages 842 and 843 may also be omitted by adjusting the formation range of the mating-surface oil passage 840.

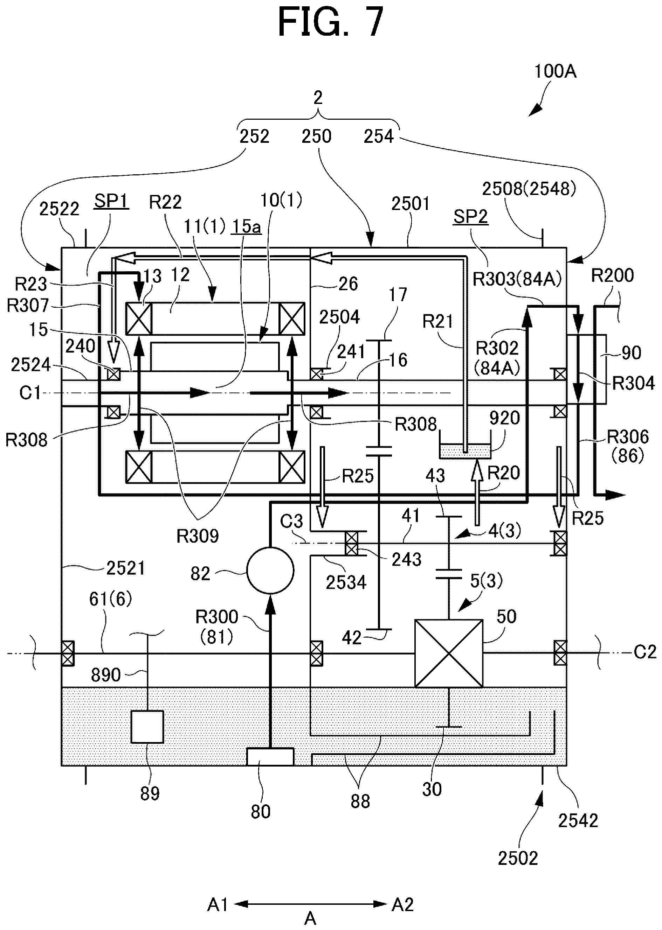

Next, another embodiment will be described with reference to FIG. 7. Hereinafter, for the sake of distinction, the embodiment described above is also referred to as a "first embodiment", and the embodiment described below with reference to FIG. 7 is also referred to as a "second embodiment".

FIG. 7 is a diagram schematically showing the flow of oil in a vehicle drive device 100A, together with a cross-sectional view of a main part of the vehicle drive device 100A according to the second embodiment.

The vehicle drive device 100A according to the second embodiment differs from the vehicle drive device 100 according to the first embodiment described above in the arrangement of the electric oil pump 82 and the strainer 80. Specifically, in the first embodiment described above, the electric oil pump 82 and the strainer 80 are disposed in the gear housing chamber SP2, whereas in the second embodiment, the electric oil pump 82 and the strainer 80 are disposed in the motor housing chamber SP1.

Here, as schematically shown in FIG. 7, when an oil temperature sensor 89 is disposed in the motor housing chamber SP1, the temperature of the electric oil pump 82 can be appropriately managed based on the oil temperature shown by the sensor information from the oil temperature sensor 89. Specifically, when the electric oil pump 82 is disposed in the gear housing chamber SP2 as in the first embodiment described above, the electric oil pump 82 tends to have a temperature significantly higher than the oil temperature shown by the sensor information from the oil temperature sensor 89 in the motor housing chamber SP1 due to the influence of heat reception from the differential gear mechanism 5 and the like. In this case, it is difficult to appropriately manage the temperature of the electric oil pump 82. In contrast, according to the second embodiment, since the electric oil pump 82 is disposed in the same motor housing chamber SP1 as the oil temperature sensor 89, the temperature of the electric oil pump 82 can be managed based on the sensor information from the oil temperature sensor 89.

When the oil temperature sensor 89 is provided in the motor housing chamber SP1, wiring 890 between the oil temperature sensor 89 and a control device (not shown) can be provided via the motor housing chamber SP1. For example, it is easy to route the wiring 890 in an inverter housing chamber (not shown) that houses an inverter (not shown), along with wiring (not shown) of a low-voltage system, such as the rotation angle sensor and temperature sensor of the rotary electric machine 1.

In the present second embodiment as well, an oil passage 84A including the mating-surface oil passage 840 described above can be implemented. In this case, the oil passage 84A may differ from the oil passage 84 according to the first embodiment described above only in the oil passage part to the mating-surface oil passage 840. That is, only the oil passage part leading to the axial flow passage 839 (see FIG. 3) or the axial flow passage 839 may be different. Note that such an oil passage can be formed in the motor case 250 by processing, but may be formed of a tubular member.

Although each embodiment has been described in detail above, the present invention is not limited to a specific embodiment, and various modifications and changes can be made within the scope described in the claims. In addition, all or a plurality of the components of the embodiments described above can be combined.

For example, in the embodiment described above, the mating-surface oil passage 840 is formed by a combination of both the groove portion 25090 and the groove portion 25490, but the present invention is not limited thereto. That is, even when only one of the groove portion 25090 and the groove portion 25490 is formed, a closed oil passage similar to the mating-surface oil passage 840 can be formed.

Further, in the embodiment described above, the mating surfaces 2509, 2549 on which the groove portion 25090 and the groove portion 25490 are respectively formed are formed in a manner not continuous with the mating surfaces 2508, 2548 related to the coupling portion 2502, but may be partially or entirely continuous. For example, the mating surface 2509 and the mating surface 2508 may be connected via a connection surface in the same plane.

In the embodiment described above, the mating-surface oil passage 840 is formed in association with the mating surfaces 2509, 2549 between the motor case 250 and the gear case member 254, but a mating-surface oil passage like the mating-surface oil passage 840 may be formed in association with another mating surface.

In the embodiment described above, the power source is the rotary electric machine 1, but may include an engine (internal combustion engine) instead of or in addition to the rotary electric machine 1.

In the embodiment described above, the mating-surface oil passage 840 is formed at only one position, but may be formed at two or more positions separated from each other.

In the embodiment described above, the mating surfaces 2508, 2509 on the motor case 250 side are in the same plane, and the mating surfaces 2548, 2549 on the gear case member 254 side are in the same plane, but the present invention is not limited thereto. As long as the mating surfaces 2508, 2548 are aligned with each other in the axial direction A and the mating surfaces 2509, 2549 are aligned with each other in the axial direction A, the mating surfaces 2508, 2509 on the motor case 250 side may be surfaces offset from each other in the axial direction A.

### REFERENCE SIGNS LIST

100: Vehicle drive device, 1: Rotary electric machine (power source), 13: Coil end portion (supply target), 15: Rotor shaft (supply target), 2: Case, 250: Motor case (case member), 254: Gear case member (cover member), 4: Counter gear mechanism (power transmission mechanism), 5: Differential gear mechanism (power transmission mechanism), 90: Oil cooler, 2508: Mating surface (first mating surface), 2548: Mating surface (third mating surface), 2509: Mating surface (second mating surface), 2549: Mating surface (fourth mating surface), 840: Mating-surface oil passage (oil passage), 25090, 25490: groove portion, 240, 241, 243: Bearing (supply target), SP1: Motor housing chamber (first housing chamber), and SP2: Gear housing chamber (second housing chamber)

## Claims

1. A vehicle drive device comprising:
a case that forms a housing chamber in which oil flows;
a power transmission mechanism disposed in the housing chamber and including a rotary shaft member that enables transmission of power from a power source to a wheel;
an oil pump that sucks and discharges oil in the housing chamber; and
an oil passage structure, at least a part of which is formed in the case,
wherein
the case includes
a case member including, at an axial end, a first mating surface and a second mating surface that is located on a radially inner side of the first mating surface as viewed in an axial direction of the rotary shaft member, and
a cover member including a third mating surface aligned with the first mating surface in the axial direction and a fourth mating surface aligned with the second mating surface in the axial direction, the cover member being coupled to the case member via a coupling between the first mating surface and the third mating surface,
the oil passage structure includes an oil passage between a discharge side of the oil pump and an oil supply target, and
the oil passage is formed in a manner surrounded by at least one of the second mating surface or the fourth mating surface as viewed in the axial direction, and includes a groove portion recessed toward the at least one mating surface in the axial direction.

2. The vehicle drive device according to claim 1, further comprising an oil cooler attached to the cover member,
wherein
the oil passage extends from the discharge side of the oil pump to the oil cooler, and
the groove portion has a curved shape or a bent shape as viewed in the axial direction.

3. The vehicle drive device according to claim 1, wherein
the power source includes a rotary electric machine provided coaxially with the rotary shaft member,
the supply target includes the rotary electric machine, and
the groove portion overlaps the rotary electric machine as viewed in the axial direction.

4. The vehicle drive device according to any one of claims 1 to 3, wherein the second mating surface and the fourth mating surface are aligned in the axial direction without interposing a seal member.

5. The vehicle drive device according to claim 1, wherein
the power source includes a rotary electric machine provided coaxially with the rotary shaft member,
the housing chamber includes a first housing chamber that houses the rotary electric machine, and a second housing chamber that is adjacent to the first housing chamber in the axial direction and houses at least a part of the power transmission mechanism, and
the oil pump is of an electric type and is disposed in the first housing chamber.

6. The vehicle drive device according to claim 5, further comprising an oil temperature sensor that is disposed in the first housing chamber and generates sensor information corresponding to a temperature of oil.

7. The vehicle drive device according to claim 5 or 6, wherein the cover member is provided to cover an axial end of the second housing chamber on a side farther from the first housing chamber.
